# Europäisches Patentamt

# European Patent Office

# Office européen des brevets

(19)

(11) Veröffentlichungsnummer : **0 386 027 B1**

(12) **EUROPÄISCHE PATENTSCHRIFT**

(45) Veröffentlichungstag der Patentschrift :
**11.01.95 Patentblatt 95/02**

(21) Anmeldenummer : **88908671.6**

(22) Anmeldetag : **13.10.88**

(86) Internationale Anmeldenummer :
**PCT/DE88/00630**

(87) Internationale Veröffentlichungsnummer :
**WO 89/04480 18.05.89 Gazette 89/11**

(51) Int. Cl.⁶ : **G01N 27/417**

(54) **Verfahren zur Herstellung einer Schutzschicht eines elektrochemischen Messfühlers.**

(30) Priorität : **03.11.87 DE 3737215**

(43) Veröffentlichungstag der Anmeldung :
**12.09.90 Patentblatt 90/37**

(45) Bekanntmachung des Hinweises auf die
Patenterteilung :
**11.01.95 Patentblatt 95/02**

(84) Benannte Vertragsstaaten :
**DE FR GB IT**

(56) Entgegenhaltungen :
**DE-A- 2 852 647**
**GB-A- 2 162 324**
**US-A- 4 208 265**
**US-A- 4 220 516**
**US-A- 4 642 174**

(56) Entgegenhaltungen :
**Patent Abstracts of Japan, Band 9, Nr. 203**
**(P-381)(1926), 21. August 1985 & JP,A, 6066154**
**Patent Abstracts of Japan, Band 6, Nr. 188**
**(P-144)(1066), 28. September 1982 & JP, A,**
**57100343**

(73) Patentinhaber : **ROBERT BOSCH GMBH**
**Postfach 30 02 20**
**D-70442 Stuttgart (DE)**

(72) Erfinder : **FRIESE, Karl-Hermann**
**Strohgäustrasse 13**
**D-7250 Leonberg (DE)**
Erfinder : **WIEDENMANN, Hans-Martin**
**Brucknerstrasse 20**
**D-7000 Stuttgart 10 (DE)**
Erfinder : **SÖLL, Eva**
**Koselstr. 6**
**D-6000 Frankfurt/M. 1 (DE)**

EP 0 386 027 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

<u>Stand der Technik</u>

Die Erfindung betrifft ein Verfahren zur Herstellung einer porösen keramischen Schutzschicht aus einer $Al_2O_3$ - Matrix mit darin eingelagerten $ZrO_2$ - Partikeln gemäß der Gattung des Hauptanspruchs.

Es sind Methoden bekannt, z. B. aus der DE-OS 27 11 880 und den DE-PS 28 52 647 und 29 13 633, bei elektrochemischen Meßfühlern auf die dem zu messenden Gas ausgesetzte Elektrode eine poröse keramische Schutzschicht aufzubringen. Bei dem aus der DE-PS 28 52 647 bekannten Verfahren wird die poröse Schutzschicht vor dem Sintern oder vor einer Wärmebehandlung, bei der Sintervorgänge in der Elektrodenschicht ablaufen, auf die Elektrodenschicht aufgebracht, worauf das erzeugte Schichtensystem anschließend mit dem Festelektrolytkörper, auf dem sich das Schichtensystem befindet, gesintert wird. Bei diesem Ko-Sinterprozeß wird außerdem eine bemerkenswerte Verbesserung der Elektrodenaktivität erzielt.

In der Praxis wurden bisher $Al_2O_3$ oder Mg-Spinell $(MgO.Al_2O_3)$-Schutzschichten ohne Dispersionsverfestiger eingesetzt, obwohl in der DE-PS 28 52 647 außer diesen Schutzschichten auch solche aus stabilisiertem Zirkondioxid, reinem $ZrO_2$, Zirkonsilikat und Titandioxid einzeln oder im Gemisch miteinander beschrieben werden.

Es ist ferner allgemein bekannt, daß Zirkondioxid in verschiedenen Kristallformen auftritt, wovon die monokline, die tetragonale und die kubische Form die wichtigsten sind.

Problematisch bei aus $ZrO_2$ hergestellten keramischen Festelektrolytkörpern ist, daß die tetragonale Form metastabil ist und vergleichsweise leicht in die stabilere monokline Form übergeht. Dies kann zu schwerwiegenden Nachteilen bei Festelektrolytkörpern aus $ZrO_2$-Keramik führen, die thermischen und/oder korrosiven Beanspruchungen ausgesetzt werden, z. B. bei solchen, die zur Herstellung elektrochemischer Meßfühler verwendet werden, da durch den irreversiblen Übergang von der metastabilen tetragonalen Form in die monokline Form die mechanischen Eigenschaften der Festelektrolytkörper leiden können. Um die mechanischen Eigenschaften von elektrochemischen Meßfühlern auf $ZrO_2$-Keramikbasis zu verbessern, ist es aus der US-PS 4 221 650 bekannt, Festelektrolytkörper aus mindestens teilweise stabilisiertem kubischen $ZrO_2$ mit einem hierin dispergierten kristallinen, Aluminium enthaltenden Oxid zu verwenden.

Aus der DE-PS 25 49 652 sind ferner Festelektrolytkörper hoher Bruchzähigkeit und ein Verfahren zu ihrer Herstellung bekannt, das darin besteht, daß man ein eine Matrix bildendes Keramikmaterial und ein darin dispergierbares keramisches Einlagerungsmaterial miteinander vermischt, die Mischung gegebenenfalls trocknet, zu einem Formkörper verpreßt und diesen anschließend sintert. Das eine Matrix bildende Keramikmaterial kann beispielsweise aus $Al_2O_3$ und das Einlagerungsmaterial aus unstabilisierten $ZrO_2$-Partikeln bestehen, wobei der $ZrO_2$-Gehalt in der Matrix in vorteilhafter Weise bei 8 bis 25 Vol.-% liegt.

Nachteilig an den bisher bei elektrochemischen Meßfühlern verwendeten Schutzschichten, insbesondere reinen $Al_2O_3$- oder reinen Mg-Spinnel-Schutzschichten ist, daß sie leicht zu erheblichen mechanischen Spannungen in dem Verbundsystem Festelektrolytkörper-Schutzschicht und damit zu Haftungs- und Festigkeitsproblemen führen.

Ursache hierfür sind Unterschiede im Schwindungsverhalten beim Sintern und/oder der Wärmeausdehnung von Festelektrolytkörper und Schutzschicht. Entsprechende Probleme können bei planaren Sensorelementen, z. B. des aus den EP 0 162 603, EP 0 133 820, EP 0 125 069 und EP 0 168 938 bekannten Typs auftreten.

<u>Vorteile der Erfindung</u>

Eine keramische Schutzschicht nach der Erfindung weist gegenüber den bisher bekannt gewordenen Schutzschichten bekannter elektrochemischer Meßfühler die folgenden vorteilhaften Eigenschaften auf:

Die Verwendung von vorzugsweise durch Kofällung oder durch Vereinigung und Mischung von Suspensionen von getrennt gefällten Hydroxiden, die gegebenenfalls einen Stabilisator für das $ZrO_2$, wie z. B. $Y_2O_3$, enthalten können, zur Ausbildung der Schutzschicht ermöglicht überraschenderweise die Herstellung einer festhaftenden aufsinternden Schutzschicht mit enger Porengrößenverteilung. Die homogene Porosität der Schutzschicht läßt dabei einen Gaszutritt zur Außenelektrode des Meßfühlers zu. Durch Verwendung des $Al_2O_3/ZrO_2$-Mischoxidpulvers wird ferner ein weitestgehender Ausgleich des bisher beobachteten Mißverhältnisses von mechanischen Spannungen und Schichtfestigkeit einerseits und gewünschter Porosität und Regellage andererseits erreicht.

Ganz offensichtlich können in die $Al_2O_3$-Matrix, insbesondere $\alpha$-$Al_2O_3$-Matrix, eingelagerte metastabile $ZrO_2$-Partikel durch Phasentransformation zu Mikrorissen führen, die die Energie der auftretenden mechanischen Spannungen absorbieren und damit die Festigkeit des Verbundes von z. B. Festelektrolytkörper- und Schutzschicht positiv beeinflussen.Aber auch schon der vom Wärmeausdehnungskoeffizienten der $Al_2O_3$-Matrix abweichende Wärmeausdehnungskoeffizient der eingelagerten, gegebenenfalls stabilisierten $ZrO_2$-Partikel führt beim Abkühlen nach dem Sinterproseß zu Gefügeverspannungen und damit zur Verfestigung der porösen Schutzschicht.

Bei den erfindungsgemäßen Meßfühlern kann es sich um solche mit einem rohrförmigen Festelektrolytkörper oder um planare Meßfühler handeln. Hierzu gehören beispielsweise auch Grenzstromsensoren und Grenzstromsonden, z. B. solche, wie sie in den deutschen Patentanmeldungen P 37 28 618.8-52 und P 37 28 289.1-52 beschrieben werden.

Als vorteilhaft hat es sich erwiesen, zur Erzeugung der Schutzschicht ein $Al_2O_3/ZrO_2$-Mischoxidpulver mit gegebenenfalls stabilisierter $ZrO_2$-Komponente mit enger Korngrößenverteilung zu verwenden. In vorteilhafter Weise können die Mischoxidpulver bis zu 50 Vol.-% gegebenenfalls stabilisiertes, $ZrO_2$-Pulver enthalten. Als besonders vorteilhaft hat sich ferner die Verwendung von Mischoxidpulvern mit 85 bis 60 Vol.-% $Al_2O_3$ und 15 bis 40 Vol.-% gegebenenfalls stabilisiertem $ZrO_2$ erwiesen.

Gemäß einer weiteren besonders vorteilhaften Ausgestaltung der Erfindung werden dem Mischoxid vergleichsweise geringe Anteile eines katalytisch aktiven Materials, das die Einstellung des thermisch-chemischen Gleichgewichts des Abgases eines Verbrennungsmotors ermöglicht, zugesetzt,um eine Regellage möglichst nahe bei $\lambda = 1$ zu erreichen.

In vorteilhafter Weise verwendbar sind Pt- und Pt-Legierungspulver. Sie können in vorteilhafter Weise in Mengen von 0,05 bis 5 Vol.-%, insbesondere 0,1 bis 1 Vol.-% zugesetzt werden. Als besonders vorteilhaft hat sich beispielsweise der Zusatz eines Pt-Pulvers mit einer spezifischen. Oberfläche von $\geqq 10$ m²/g erwiesen. Die Einlagerung von derartigen katalytisch aktiven Materialien kann außerdem durch quasiplastisches Verhalten bei der thermischen Beanspruchung zur Gesamtfestigkeit der Schutzschicht beitragen.

Die zur Herstellung erfindungsgemäßer Meßfühler verwendbaren $Al_2O_3/ZrO_2$-Mischoxidpulver können in verschiedener Weise nach an sich bekannten Methoden hergestellt werden.

Beim einen geeigneten Gewinnungsverfahren werden, die Mischoxidpulver durch Vereinigung und Mischung von Al-Hydroxid- und Zr-Hydroxid-Suspensionen, die separat durch Fällprozesse erzeugt werden, und anschließende Calzinierung hergestellt. Beim anderen geeigneten Gewinnungsverfahren werden, die Mischoxidpulver ausgehend von einer Mischung aus einer $\alpha$-$Al_2O_3$- bzw. $\gamma$-$Al_2O_3$-Suspension und einer Zr-Hydroxidsuspension gewonnen, indem man ein aus der Mischung abgetrenntes $Al_2O_3$/Zr-Hydroxid-Gemisch trocknet, calziniert und vermahlt.

In sämtlichen Fällen können Stabilisatorvorläuferverbindungen, wie z. B. $YCl_3$, zugesetzt werden. Nach sämtlichen Methoden lassen sich Mischoxidpulver mit den gewünschten Verhältnissen von $Al_2O_3$ und $ZrO_2$ herstellen.

Die Schutzschichten können als keramische Schlicker nach bekannten Methoden, z. B. Tauchen, Spritzen oder Drucken auf die Elektroden aufgebracht und nach einem Trocknungsprozeß mit dem Festelektrolytkörper gemeinsam gesintert oder nachgesintert werden.

In vorteilhafter Weise verfährt man derart, daß man auf die Elektrode bzw. die Elektroden oder auch größere Bereiche des Festelektrolytkörpers eine etwa 50 bis 200μm dicke Schicht aufträgt, bei Temperaturen im Bereich von 60 bis 150 °C etwa 0,5 bis 2 Stunden lang trocknet und anschließend bei Temperaturen im Bereich von 1350 bis 1500 °C etwa 1 bis 10 Stunden langsintert, bzw. nachsintert, je nachdem, ob ungesinterte, vorgesinterte oder fertig gesinterte Festelektrolytkörper in Form von Sondensteinen oder Keramikfolien verwendet werden.

<u>Zeichnungen</u>

Die Zeichnungen dienen der näheren Erläuterung der Erfindung. Dargestellt sind in

Fig. 1    der Kopf eines elektrochemischen Meßfühlers im Schnitt und in
Fig. 2    ein Abschnitt des Meßfühlers gemäß Fig. 1 vergrößert dargestellt.

Der Meßfühlerkopf besteht aus einem einseitig geschlossenen Rohr 10 aus einem Festelektrolyten, z. B. stabilisiertem Zirkondioxid, dessen offenes Ende 11 eine erhöhte Wandstärke aufweist. Auf der Innenwand des Rohres 10 im Luftreferenzkanal befindet sich die Innenelektrode 12, z. B. aus 60 Vol.-% einer Palladium-Platin-Legierung mit 20 Vol.-% Platin und 40 Vol.-% stabilisiertem Zirkondioxid. Auf der Außenwand des Rohres 10 befindet sich die dem Meßgas ausgesetzte Außenelektrode 13, z. B. aus 60 Vol.-% einer Platin-Rhodium-Legierung mit 20 Vol.-% Rhodium und 40 Vol.-% stabilisiertem Zirkondioxid und darüber die poröse keramische Schutzschicht 14. Der dargestellte Meßfühlerkopf ist Teil eines üblichen elektrochemischen Meßfühlers, wie er im Prinzip beispielsweise näher beschrieben ist in der DE-PS 29 13 633.

Beispiele

## Beispiel 1

65 Gewichtsteile einer Mischung bestehend aus 60 Gewichtsteilen $\alpha$-$Al_2O_3$-Pulver ($\geqq$ 99% $Al_2O_3$; spezifische. Oberfläche 10 m²/g) und 40 Gewichtsteilen $ZrO_2$-Pulver ($\geqq$ 99 % $ZrO_2$; spez. Oberfläche 1,5 m²/g), 36 Gewichtsteile Wasser und 2 Gewichtsteile Polyvinylalkohol als Binder wurden in einer Vibratom-Mühle 6 Stunden lang vermahlen.

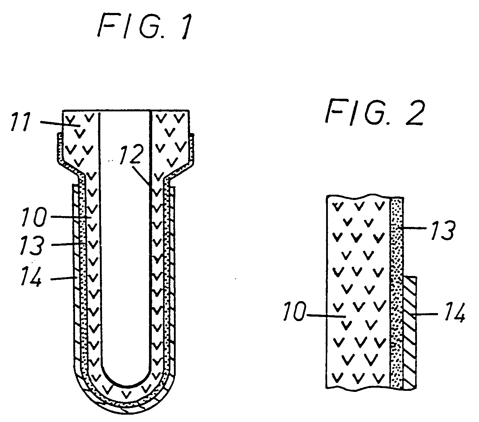

Die erhaltene Dispersion wurde durch Spritzen auf den mit einer Elektrodenschicht versehenen Teil eines vorgesinterten Festelektrolytkörpers eines Meßfühler-Kopfes des aus den Fig. 1 und 2 dargestellten Typs in einer Schichtstärke von etwa 150μm aufgespritzt. Anschließend wurde der Meßfühlerkörper etwa 3 Stunden lang bei einer Temperatur im Bereich von 1400 °C nachgesintert.

Auf diese Weise wurde eine von mechanischen Spannungen weitestgehend freie Schutzschicht homogener Porosität von hoher Schichtfestigkeit über der dem zu messenden Gas ausgesetzten Elektrode erhalten.

## Beispiel 2

Das in Beispiel 1 beschriebene Verfahren wurde wiederholt mit der Ausnahme jedoch, daß diesmal anstelle des nicht-stabilisierten $ZrO_2$-Pulvers ein teilstabilisiertes $ZrO_2$-Pulver (YSZ-Pulver) mit 2 Mol-% $Y_2O_3$ bezogen auf 100 Mol.-% teilstabilisiertes $ZrO_2$-Pulver und einer spezifischen. Oberfläche von $\approx$ 14 m²/g verwendet wurde.

## Beispiel 3

Das in Beispiel 1 beschriebene Verfahren wurde wiederholt mit der Ausnahme jedoch, daß diesmal anstelle des Gemisches aus $Al_2O_3$-Pulver und $ZrO_2$-Pulver ein durch Kofällung erhaltenes $Al_2O_3/ZrO_2$-Mischoxidpulver wie in Beispiel 7 beschrieben mit 40 Gew.-% $ZrO_2$ mit einer spezifischen. Oberfläche von $\approx$ 10 m²/g verwendet wurde.

## Beispiel 4

In einer Zentrifugal-Kugelmühle wurden miteinander vermahlen:

| | |
|---|---|
| 100 Gew.-Teile | eines Mischoxidpulvers bestehend aus 60 Gew.-Teilen $Al_2O_3$ und 40 Gew.-Teilen $ZrO_2$, wie in Beispiel 3 beschrieben, |
| 8 Gew.-Teile | Polyvinylbutyral als Binder, |
| 4 Gew.-Teile | Dibutylphthalat als Weichmacher und |
| 50 Gew.-Teile | Butylcarbitol als Lösungsmittel. |

Die Mahldauer betrug 2 Stunden.

Die erhaltene Paste wurde im Siebdruck auf die Elektroden von planaren Meßfühlern, wie sie in den deutschen Patentanmeldungen P 37 28 618.8-52 und P 37 28 289.1-52 beschrieben werden, im ungesinterten Zustand derselben aufgedruckt.

Nach dem Auftrocknen wurde 2 Stunden lang bei einer Temperatur im Bereich von 1400 °C gesintert.

Es wurden wiederum von mechanischen Spannungen weitestgehend freie Schutzschichten homogener Porosität über den Elektroden erhalten.

## Beispiel 5

Um die Abhängigkeit der Güte des Schichtverbundes von poröser Schutzschicht und dem mit Elektroden beschichteten Festelektrolytkörper vom $ZrO_2$-Gehalt der Schutzschicht zu veranschaulichen, wurden auf die Elektroden von Festelektrolytkörper des aus der DE-PS 28 52 647 bekannten Typs Schutzschichten aus Druckpasten mit verschiedenem $ZrO_2$-Gehalt aufgedruckt. Vier der verwendeten Druckpasten wurden nach dem in Beispiel 4 beschriebenen Verfahren ausgehend von durch Kofällung erhaltenen $Al_2O_3/ZrO_2$-Mischoxidpulvern hergestellt. Die Druckpasten enthielten die in Beispiel 4 angegebenen Mengen an Binder, Weichmacher und Lösungsmittel.

Es wurden die folgenden Ergebnisse erhalten:

| Al$_2$O$_3$ Gew.-% | ZrO$_2$ Gew.-% | Güte des Schichtverbundes (relative Einheiten) |
|---|---|---|
| 100 | – — | 30 |
| 95 | 5 | 48 |
| 80 | 20 | 62 |
| 70 | 30 | 69 |
| 60 | 40 | 78 |

Aus den erhaltenen Ergebnissen ergibt sich, daß die Güte des Schichtverbundes mit steigendem ZrO$_2$-Anteil ansteigt.

Beispiel 6

Auf den vorgesinterten, mit Elektrodenschichten versehenen Festelektrolytkörper eines Meßfühlers des in der DE-PS 28 52 647 beschriebenen Typs wurde durch Tauchbeschichten oder Bespritzen eine Al$_2$O$_3$/ZrO$_2$-Suspension mit einem organischen Binder/Lösungsmittelsystem bestehend aus

40 Gew.-Teilen     Terpinol und
60 Gew.-Teilen     Benzylalkohol

unter Zusatz von 4 - 10 Gew.-% Ethylcellulose aufgetragen. Die Suspension wurde durch 15-minütiges Verrühren von

65 Gew.-Teilen     eines Al$_2$O$_3$/ZrO$_2$-Gemisches wie in Beispiel 3 beschrieben und
35 Gew.-Teilen     des Lösungsmittelsystems

in einem üblichen Rührer erhalten.

Nach dem Auftragen der Suspension wurde 1/2 Stunde bei einer Temperatur im Bereich von 100 °C getrocknet. Anschließend wurde bei einer Temperatur von 1400 °C nachgesintert

Es wurde wiederum eine von mechanischen Spannungen weitestgehend freie Schutzschicht homogener Porosität von hoher Schichtfestigkeit erhalten.

Beispiel 7

Ein geeignetes Gewinnungsverfahren eines Herstellungsverfahrens ist die Kofallung aus Lösungen von Aluminiumoxychlorid und Zirkonoxychlorid (ZrOCl$_2 \cdot$ 8 H$_2$O), gegebenenfalls unter Zusatz von YCl$_3$ oder einem anderen geeigneten Chlorid, zu hydrolysieren, die erhaltene Hydroxidmischung abzutrennen, zu trocknen, zu calzinieren und zu vermahlen, Anstelle von Chloriden lassen sich beispielsweise auch Oxalate und Alkoxide verwenden.

**Patentansprüche**

1. Verfahren zur Herstellung einer porösen keramischen Schutzschicht aus einer Al$_2$O$_3$-Matrix mit darin eingelagerten ZrO$_2$-Partikeln auf einem Festelektrolytkörper eines elektrochemischen Meßfühlers zur Bestimmung des Sauerstoffgehalts in Gasen, bei dem die Al$_2$O$_3$-Matrix mit den eingelagerten ZrO$_2$-Partikeln durch Sintern eines von Oxidpulvern aus Al$_2$O$_3$ und ZrO$_2$ und gegebenenfalls weiteren Beimischungen hergestellt wird, dadurch gekennzeichnet, daß durch eines der an sich bekannten Gewinnungsverfahren Kofällen oder Vereinigung und Mischung von Suspensionen mit getrennt gefällten Komponenten eine Mischung der Oxidpulver erzeugt wird, daß das Al$_2$O$_3$-Pulver in der Mischung 60 bis 85-Gew.-% ausmacht, daß aus dem gewonnenen Mischoxidpulver eine Suspension hergestellt wird, daß die Suspension auf den Festelektrolytkörper in an sich bekannter Weise aufgetragen wird, und daß anschließend die durch die aufgetragene Suspension erzeugte Schutzschicht mit dem Festelektrolytkörper ko-gesintert wird.

2. Verfahren nach Anspruch 1, dadurch gekennzeichnet, daß dem Mischoxidpulver 0.05 - 5.00 Vol.-% eines katalytisch aktiven Materials zur Einstellung des thermischen Gleichgewichts im Abgas eines Verbrennungsmotors zugesetzt wird.

**3.** Verfahren nach Anspruch 1, dadurch gekennzeichnet, daß dem Mischoxidpulver 0,10 - 1.00 Vol.-% des katalytisch aktiven Materials zugesetzt wird.

**4.** Verfahren nach einem der Ansprüche 1 und 2, dadurch gekennzeichnet, daß als katalytisch aktives Material Platin oder eine Platinlegierung verwendet wird.

## Claims

**1.** Process for producing a porous ceramic protective layer comprising an $Al_2O_3$ matrix containing $ZrO_2$ particles embedded therein on a solid electrolyte body of an electrochemical sensor for determining the oxygen contents of gases, in which the $Al_2O_3$ matrix containing the embedded $ZrO_2$ particles is produced by sintering a [lacuna] of oxide powders of $Al_2O_3$ and $ZrO_2$ and, if desired, further constituents, characterized in that a mixture of the oxide powders is produced by one of the processes, which are known per se, of coprecipitation or combining and mixing of suspensions containing separately precipitated components, that the $Al_2O_3$ powder makes up from 60 to 85% by weight of the mixture, that a suspension is prepared from the mixed oxide powder obtained, that the suspension is applied to the solid electrolyte body in a manner known per se, and that subsequently the protective layer produced by means of the applied suspension is co-sintered with the solid electrolyte body.

**2.** Process according to Claim 1, characterized in that there is added to the mixed oxide powder 0.05 - 5.00% by volume of a catalytically active material to establish the thermal equilibrium in the exhaust gas of an internal combustion engine.

**3.** Process according to Claim 1, characterized in that there is added to the mixed oxide powder 0.10 - 1.00% by volume of the catalytically active material.

**4.** Process according to either of Claims 1 and 2, characterized in that the catalytically active material used is platinum or a platinum alloy.

## Revendications

**1.** Procédé de fabrication d'une couche de protection céramique poreuse à partir d'une matrice (1) avec des particules (2) incorporées dedans sur un corps d'électrolyte solide d'un capteur électrochimique de mesure pour déterminer la teneur en oxygène dans les gaz, procédé dans le cas duquel la matrice (1) est fabriquée avec les particules (2) incorporées par frittage de l'une des poudres d'oxydes composées de (1) et (2) et le cas échéant d'autres ajouts, procédé caractérisé en ce que l'on produit un mélange des poudres d'oxydes grâce à un procédé de préparation connu en soi, la coprécipitation ou la purification et le mélange de suspensions avec des composants précipités séparément, en ce que la poudre représente dans le mélange 60 à 85 % en poids en ce que l'on réalise une suspension à partir du mélange pulvérulent d'oxydes obtenu en ce que l'on applique la suspension sur le corps d'électrolyte solide d'une manière connue en soi, et en ce qu'ensuite la couche de protection produite par la suspension appliquée est cofrittée avec le corps d'électrolyte solide.

**2.** Procédé selon la revendication 1, caractérisé en ce que l'on ajoute au mélange pulvérulent d'oxyde 0,05 à 5,00 % en volume d'une matière catalytiquement active pour établir l'équilibre thermique dans les gaz d'échappement d'un moteur à combustion interne.

**3.** Procédé selon la revendication 1, caractérisé en ce que l'on ajoute au mélange pulvérulent d'oxydes 0,10 à 1,00 % en volume de la matière catalytiquement active.

**4.** Procédé selon l'une des revendications 1 et 2, caractérisé en ce que l'on utilise comme matière catalytiquement active du platine ou un alliage de platine.

FIG. 1

FIG. 2